# EUROPEAN PATENT APPLICATION

(11) **EP 3 761 615 A1**
(43) Date of publication of application: **06.01.2021**
(21) Application number: 19183563.6
(22) Date of filing: 01.07.2019
(51) Int. Cl.: H04L 29/12, H04L 12/721

(54) **METHOD FOR AUTOMATICALLY MAPPING CONTROLLERS AND CONTROLLABLE NODE IN A HIERARCHICAL CONTROL SYSTEM**

(71) Applicant: Siemens Aktiengesellschaft, 80333 München (DE)
(72) Inventor: Sakic, Ermin, 81379 München (DE)

(57) **Abstract**

The invention relates to a method for automatically detecting controllers (21i, 22i) in a hierarchical control system (100), comprising polling, by a controllable nodes (32i, 32ij), a DNS name server (11, 12i) of the hierarchical control system (100), for a possible DNS entry of a controller (21i, 22i), the possible DNS entry comprising a prefix selected from a set of at least one predefined controller name, and a suffix being selected from a domain search list of at least one search domain; sending, by the DNS name server, a response signal to the controllable node (32i, 32ij), if the possible DNS entry corresponds to one of the plurality of controllers (21i, 22i) of the hierarchical control system (100); and detecting, by the controllable node (32i, 32ij), the controller (21i, 22i) corresponding to the possible DNS entry, based on receiving the response signal.

## Description

The present invention relates to a method for automatically detecting controllers in a hierarchical control system. The invention further relates to a controllable node of a hierarchical control system and to a hierarchical control system itself. The invention further relates to computer program products and non-transitory, computer-readable storage mediums performing the method for automatically detecting controllers.

### Prior Art

A hierarchical control system, HCS, comprises controllable nodes, e.g. devices such as switches, and governing software, e.g. implemented in controllers, arranged in a hierarchical tree. To enable more dynamic network configurations, software-defined networking, SDN, technology distinguishes between the process of forwarding network packets in a data plane from the routing process in a control plane. Such networks, as well as other centralized control components, e.g. network management system, NMS, instances or CNC TSN centralized controllers, require mechanisms to detect controllers and establish connections between the controllers and the controllable nodes.

A standard way to achieve these goals is to provide the static IP addresses of the controllers in the configuration files of the controllable nodes. For example, in the OpenFlow model associated with SDN, controllers are assigned a unique IP address and switches are manually pre-configured with the IP addresses of a single or of multiple backup controllers before a connection to the controllers can be established.

While such an approach is applicable for static networks, there is increasing demand to allow more flexible network configurations. For instance, virtual network functions and dynamic networking schemes allow late binding of IP addresses using DHCPv4, DHCPv6, SLAAC, etc. The IP addresses of the controllers are dynamically assigned at runtime and therefore initially unknown, making it impossible to include the IP addresses in the configuration files of the controllable nodes at the time of configuration planning. Therefore, the approach of preconfiguring IP addresses limits the benefits of flexibility due to late binding in such methods and protocols.

Industry 4.0 scenarios, such as dynamically managed industrial networks, require on-the-fly cell integration to already deployed backbones. Since any downtime of backbones is usually to be avoided or even impossible, a dynamic integration of newly added controllers or controllable nodes is extremely important. Similar demands are upcoming with virtualized environments having virtualized control nodes (virtual switches) and controllers, e.g. SDN controllers, CNC TSN controllers etc., that may be spinned up on demand for the purposes of scalability or virtual tenant isolation.

Accordingly, there is a demand for more dynamic network configurations which allow adding controllable nodes or controllers during runtime without the need to establish the required connections manually by a network administrator.

### Summary of the Invention

The invention solves the above problem by the subject matter of the independent claims. Preferred embodiments are set out in the dependent claims.

The invention provides a method for automatically detecting controllers in a hierarchical control system as recited in claim 1. The invention further provides a controllable node for a hierarchical control system as recited in claim 11, and a hierarchical control system as recited in claim 13. Further, the invention provides a computer program product as recited in claim 14 and a non-transitory, computer readable storage medium as recited in claim 15.

According to the first aspect, the invention therefore provides a method for automatically detecting controllers in a hierarchical control system. The hierarchical control system comprises a plurality of controllers and a plurality of controllable nodes arranged in a plurality of levels. One of the controllable nodes is polling a DNS name server of the hierarchical control system for a possible DNS entry of a controller. The possible DNS entry comprises a prefix selected from a set of at least one predefined controller name and a suffix selected from a domain search list of at least one search domain. If the possible DNS entry corresponds to one of the plurality of controllers of the hierarchical control system, the DNS name server sends a response signal to the controllable node. Based on receiving a response signal, the controller detects the controllable node corresponding to the possible DNS entry.

According to a second aspect, the invention provides a controllable node of a hierarchical control system, the hierarchical control system comprising a plurality of controllers and a plurality of controllable nodes arranged in a plurality of levels. The controllable node is arranged to poll a DNS name server of the hierarchical control system for a possible DNS entry of a controller. The possible DNS entry comprises a prefix selected from a set of at least one predefined controller name, and a suffix selected from a domain search list of at least one search domain. The controllable node is further adapted to receive a response signal from the DNS name server, the response signal being sent if the possible DNS entry corresponds to one of the plurality of controllers of the hierarchical control system. The controllable node is further adapted to detect the controller corresponding to the possible DNS entry based on receiving the response signal.

According to a third aspect, the invention provides a hierarchical control system having a plurality of controllers arranged in a plurality of levels. The hierarchical control system further comprises at least one DNS name server. The hierarchical control system further comprises a plurality of controllable nodes arranged in the plurality of levels. The controllable nodes are arranged to poll the DNS name server for a possible DNS entry of a controller. The possible DNS entry comprises a prefix selected from a set of at least one predefined controller name, and a suffix selected from a domain search list of at least one search domain. The DNS name server is adapted to send a response signal to the controllable node if the possible DNS entry corresponds to one of the plurality of controllers of the hierarchical control system. The controllable node is further adapted to detect the controller corresponding to the possible DNS entry based on receiving the response signal.

According to a fourth aspect, the invention also provides a computer program comprising executable program code configured to, when executed (e.g. by a computing device), perform the method according to the second aspect of the invention.

According to a fifth aspect, the invention also provides a non-transitory computer-readable data storage medium comprising executable program code configured to, when executed (e.g. by a computing device), perform the method according to the third aspect of the invention.

According to the invention, the controllable nodes can resolve the IP addresses of the controllers by means of polling a DNS name server hosted in local layer 2 network. Each controller of the network is preferably assigned to one of the predefined controller names, making it possible for the controllable nodes to connect to the controllers without the need for any manual pre-configuration. Therefore, after adding new controllers to the hierarchical control system, connections between the control nodes and the newly added controllers can be established without any further interactions of a network administrator. Accordingly, the hierarchical control system can be expanded or modified in a very dynamic way, meeting the demands of dynamically managed industrial networks or virtual environments. The effort in configuring or reconfiguring the controllers during planned or unplanned network extensions or network/cluster re-configurations is therefore minimized. Controllers can be discovered in a completely seamless manner, making it useful for simplified control plane downscaling or upscaling.

According to a preferred embodiment, the method for automatically detecting controllers in a hierarchical control system is applied to an OpenFlow model, e.g. in an SDN architecture. According to a further embodiment, the method for automatically detecting controllers in a hierarchical control system is applied to NETCONF/YANG models, e.g. used in CNC-switch signaling for TSN devices, as set out in the IEEE 802.1Qcc standard.

According to a preferred embodiment of the method, polling the DNS name server is repeated until a predetermined minimum number of controllers is detected. The predetermined number of controllers is greater than 1, e.g. equal to 2, to provide a certain redundancy if one of the controllers fails.

According to a preferred embodiment of the method, the controllable node automatically connects to the detected controller. The controllable node may connect to the detected controller immediately after detecting the controller. The controllable node may also connect to the detected controller only after a certain minimum number of controllers has been detected. The controllable node may then connect to all of the detected controllers in parallel.

According to a preferred embodiment of the method, a priority is assigned to each controller name out of the set of at least one predefined controller name. Connecting the controllable node to the controllers takes the priorities assigned to the corresponding controller names into account. For example, the priorities can be chosen according to the levels of the respective controller. Controllers of higher levels are given higher priorities as compared to controllers of lower levels. For example, the hierarchical control system may comprise a backbone level, being of a higher priority than a cell level. The controllable nodes prefer to connect to controllers of the backbone level, thus providing a more centralized control of the controllable nodes.

According to a preferred embodiment of the method, the controllable node connects to controllers of higher priority than the currently connected controllers only if a predetermined minimum number of controllers of the higher priority is detected. If controllable nodes are connected to a plurality of controllers, synchronization between the controllers is required. It is preferred to reduce the required synchronization as far as possible. Preferably, the controllable node connects to higher priority controllers only if the number of detected higher priority controllers exceeds the minimum number of controllers the controllable node is required connect to. Accordingly, it is avoided that the controllable node is connected both to controllers of higher and of lower priorities. For example, the controllable node is only connected to controllers of a backbone level and not to any controller on a lower priority cell level. Therefore, synchronization between controllers of different levels, e.g. backbone controllers and cell controllers, can be avoided. One advantage of avoiding synchronization between controllers of different levels is that lower-priority level controllers are typically of lower performance, making synchronization disadvantageous. Further, security aspects can make a synchronization between controllers of different levels difficult.

According to a preferred embodiment of the method, when all controllable nodes are connected to controllers of at least a certain priority, controllers of lower priorities are disabled. After migrating all controllable nodes from the administrative domains of controllers of lower levels, e.g. cell controllers, to the administrative domains of higher level controllers, e.g. backbone controllers, the lower level controllers may become redundant. Accordingly, the controllers are enabled only as long as they are connected to any controllable nodes. Disabling controllers which are no longer needed saves energy costs and simplifies the networking architecture.

According to a preferred embodiment of the method, when all controllable nodes are connected to controllers of at least a certain priority, controllers of lower priorities are hierarchized, i.e. controllers of lower priorities are controlled by higher-level controllers to perform tasks which only relate to the lower priority level of the controller itself.

According to a preferred embodiment of the method, the suffix of the possible DNS entry is selected from search domains of the same or higher levels as the level of the controllable node itself. The suffix of the possible DNS entry may be selected from search domains in increasing order of priority. For example, the suffix of the possible DNS entry may first be selected from a cell level. If the controller with the corresponding prefix, i.e. predefined controller name, exists on the same level, the controllable node will in the next step try to resolve the controller at a higher level, e.g. a backbone level.

According to a preferred embodiment of the method, the number of controllers of the plurality of controllers is dynamically adjustable. That is, controllers can be added or removed during runtime. Further, also controllable nodes may be added or removed during runtime, i.e. the number of controllable nodes of the plurality of controllable nodes can also be dynamically adjustable.

According to a preferred embodiment of the method, the hierarchical control system comprises a plurality of routers arranged in the plurality of levels. A newly added controller is assigned to a router of the same level. The assigned router is adapted to assign a unique DNS entry to the newly adapted controller using a prefix selected from the set of at least one predefined controller name. The router may select the prefix based on the current hostname of the controller, e.g. controller-cell-1 or controller-backbone-1, and the router may select the suffix corresponding to the domain in which the controller is attached, e.g. costumer1.provider or cell1.customer1.provider.

It should be understood that all advantageous options, variance in modifications described herein and the foregoing with respect to embodiments of the hierarchical control system may be equally applied to embodiments of the method for automatically detecting controllers.

### Brief description of the drawings

The invention will be explained in greater detail with reference to exemplary embodiments depicted in the drawings as appended.

The accompanying drawings are included to provide a further understanding of the present invention and are incorporated in and constitute a part of this specification. The drawings illustrate embodiments of the present invention and together with the description serve to explain the principles of the invention.

Other embodiments of the present invention and many of the intended advantages of the present invention will be readily appreciated as they become better understood by reference to the following detailed description. It should be understood that method steps are numbered for easier reference but that said numbering does not necessarily imply steps being performed in that order unless explicitly or implicitly described otherwise. In particular, steps may also be performed in a different order than indicated by their numbering. Some steps may be performed simultaneously or in an overlapping manner.
- Fig. 1: schematically shows a block diagram illustrating a hierarchical control system according to an embodiment of the invention, the hierarchical control system having controllable nodes according to an embodiment of the invention;
- Fig. 2: schematically shows a flow diagram of a method for automatically detecting controllers according to an embodiment of the invention;
- Fig. 3: schematically illustrates a block diagram illustrating a computer program product according to an embodiment of the invention; and
- Fig. 4: schematically illustrates a block diagram illustrating a non-transitory, computer-readable storage medium according to an embodiment of the invention.

### Detailed description of the invention

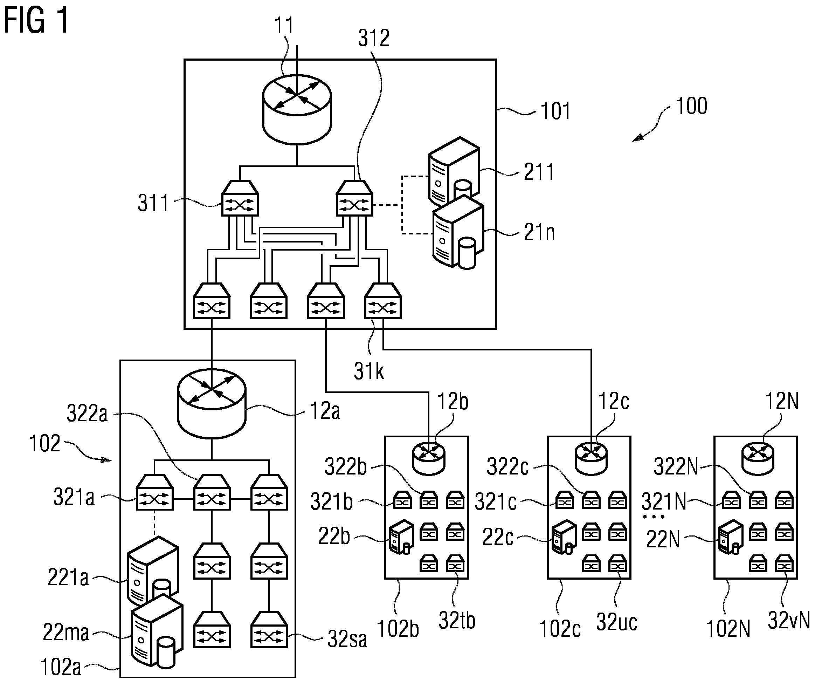

Figure 1 schematically illustrates a hierarchical control system 100 having different levels or layers, namely a backbone level 101 and a cell level 102. Whereas only two levels are shown in the hierarchical control system 100 in figure 1, the invention is not restricted to any specific number of levels. In particular, there may be considerably more levels.

The backbone level 101 comprises a backbone router and DNS name server 11. The backbone level 101 further comprises a plurality of controllable nodes 311-31k and a plurality of controllers 211-21n, wherein k and n are integer numbers which may change over time as additional controllable nodes and/or controllers are added or as controllable nodes and/or controllers are removed from the backbone level 101. However, the backbone level 101 may also be static, i.e. no controllers or controllable nodes are added to or removed from the backbone level 101.

In the embodiment shown in figure 1, the controllable nodes 311-31k are network switches. However, according to different embodiments, the controllable nodes 311-31k may comprise virtual switches or hardware components, such as sensors or actors or the like.

The backbone router and DNS name server 11 is connected to the controllable nodes 311-31k and is adapted to forward data packets between the controllable nodes 311-31k of the hierarchical control system 100. The controllable nodes 311-31k can be connected to the controllers 211-21n which are adapted to control the controllable nodes 311-31k.

At the cell level 102, the hierarchical control system 100 further comprises a plurality of cells 102a-102N, wherein N is an integer number. Each cell 102a-102N comprises a respective backbone router and DNS name server 12a-12N being connected to controllable nodes 321a-32sa, 321b-32tb, 321c-32uc, 321N-32vN, wherein s, t, u,... v are integer numbers denoting the number of controllable nodes 321a-32vN of each cell. The controllable nodes 321a-32vN are preferably network switches. The backbone router and DNS name server 12a-12N are adapted to forward data packets between the controllable nodes 321a-32vN of each cell of the cell level 102 of the hierarchical control system 100.

Each cell 102a-102N further comprises controllers 221a-22ma, 22b, 22c to 22N, wherein m is an integer denoting the number of controllers in the first cell 102a. For the second to N-th cells, only one controller is shown. However, the cells may generally comprise an arbitrary number of controllers. Further, the number of controllers 221a-22N and the number of controllable nodes 311-32vN is preferably dynamically adjustable, i.e. additional controllers and/or additional controllable nodes may be added or already existing controllers and/or controllable nodes may be removed.

The controller 221a-22N in lower levels, e.g. on the cell level 102, may be of lower performance as compared to controllers 211-21n of higher levels, e.g. on the backbone level 101. For example, controllers 221a-22N in lower levels may be implemented as software running on the controllable nodes 311-32vN.

At any point a controller 221a-22N on the cell level 102 is physically reachable in the hierarchical control system 100, i.e. is attached to the existing hierarchical control system 100, the associated router and DNS name server 12a-12N assigns the controller 221a-22N a unique DNS entry, composed of a prefix and a suffix. The prefix is assigned based on a set of predefined control names. Predefined controller names may be arranged in an ordered list and the router and DNS name server 12a-12N may assign to the newly added controller 221a-22N the next available controller name in the list. The suffix is selected based on the domain to which the controller 221a-22N is attached. For instance, a controller 221a-22ma in the first cell 102a may be assigned the prefix controller-cell-1 and the suffix *.cell1.customer1.provider corresponding to the domain of the first cell 102a. Accordingly, the controller 221a-22N will receive the fully qualified domain name, FQDN, of controller-cell-1.cell1.customer1.provider. Similarly, a controller 211-21n attached to the backbone level 101 may be assigned the prefix controller-backbone-1 and the suffix *.customer1.provider corresponding to the domain of the backbone level 101, leading to an FQDN of controller-backbone-1.customer1.provider.

The controllable nodes 311-32vN are assigned a FQDN in a similar manner. For instance, a controllable node 321a-32sa in cell 1 is assigned a prefix, i.e. hostname, switch1 and a suffix, i.e. domain, *.cell1.customer1.provider, resulting in the FQDN of switch1.cell1.customer1.provider.

Each controllable node 311a-32vN can be connected to controllers 221a-22N of the same level or cell 102a-102N within the level or to controllers 211-21n of higher levels, e.g. of the backbone level 101.

The controllable nodes 311-32vN comprise an agent which, on startup, is provided with a mapping of controller types and their priorities. For instance, controllers 221a-22N with the names controller-cell-1, controller-cell-2,... may be given a lower priority than controllers 211-21n with the names controller-backbone-1, controller-backbone-2,.... In other words, the priorities may be determined based on the level of the controller 211-22N. The agent is further provided with a minimum number K of required simultaneously connected controllers 211-22N.

The agent is adapted to constantly poll the DNS name server 11, 12a-12N of the corresponding cell level 102 for possible DNS entries of a controller 211-21N. The agent is adapted to generate the possible DNS entry by combining a prefix selected from the set of at least one predefined control names with a suffix selected from a domain search list of search domains corresponding to the levels of the hierarchical control system 100. For example, the agent may be adapted to resolve DNS entries with prefixes corresponding to controllers 221a-22N in the cell level, e.g. controller-cell-1, controller-cell-2,.... In the beginning, the suffix is chosen to be the same cell or same level of the controllable node 311-32vN hosting the agent. For instance, an agent of a controllable node 321a-32sa in the first cell 102a will first try to poll for DNS entries with the suffix or domain *.cell1.customer1.provider.

The router or DNS name server 11-12N is adapted to send a response signal to the controllable node 311-32vN if the possible DNS entry corresponds to one of the plurality of controllers 211-22N, thus confirming the existence of the controller 211-22N. If the controllable node 311-32vN receives the response signal, it detects the controller 211-22N and may also obtain the corresponding IP address.

If the controller is unavailable, the agent may change the suffix of the possible DNS entry by increasing the level. For example, if the controller 211-22N is unavailable under the domain *.cell1.customer1.provider, the suffix is changed to *.customer1.provider. If the controller is still unavailable, the agent may try to resolve the controller 211-22N in the *.provider domain.

The agent of the controllable node 311-32vN may continue to poll the DNS name server 11-12N until the number of detected controllers 211-22N is equal to the minimum number K.

In parallel, the agent may poll the DNS name server 11-12N, trying to resolve controllers 211-21n that are of higher priority than the currently connected controllers 211-22N, e.g. the agent will in parallel poll for possible DNS entries with prefixes controller-backbone-1, controller-backbone-2,.... Again, the agent of the controllable node 311-32vN continues to poll the DNS name server 11-12N until the number of detected controllers 211-21n of higher priority is equal to the minimum number K.

After detecting the controllers 211-22N, the controllable node 311-32vN may automatically connect to the detected controllers 211-22N. The controllable node 311-32vN may also be connected to the detected controllers 211-22N based on the priority of the controllers 211-22N.

For instance, if the number of controllers 211-21n detected having a higher priority is equal to the minimum number K, the controllable node 311-32vN may be connected to the higher-level controllers 211-21n (e.g. backbone controllers 211-21n), only. The lower-level controllers 221a-22N, e.g. cell controllers 221a-22N, may be manually or automatically disabled for the rest of the lifetime of the hierarchical control system 100 to save associated energy costs.

If the number of higher-priority controllers 211-21n is smaller than the minimum number K, the controllable nodes 311-32vN are connected to lower-level controllers 221a-22N, only, e.g. only to cell controllers 221a-22N of the same cell 102a-120N.

Polling the DNS name server 11-12N may be triggered if the controllable node 311-32vN is connected to less than a predetermined minimal number of controllers 211-22N, e.g. the minimum number K.

Preferably, the agent of the controllable node 311-32vN is constantly or in certain time intervals polling the DNS name server 11-12N. Accordingly, if new controllers are added or if existing controllers are no longer accessible, the controllable node 311-32vN can automatically adjust by changing the connections to the controllers.

The components of the hierarchical control system 100, i.e. the router and DNS name server 11-12N, the controller 211-22N and the controllable nodes 311-32vN and the agents of the controllable nodes 311-32vN, may comprise hardware and software components. The hardware components may comprise at least one of microcontrollers, central processing units (CPU), memories and storage devices.

According to further embodiments, the hierarchical control system 100 may at least in part be realized as a virtualized environment having virtual switches 311-32vN and corresponding controllers 211-22N.

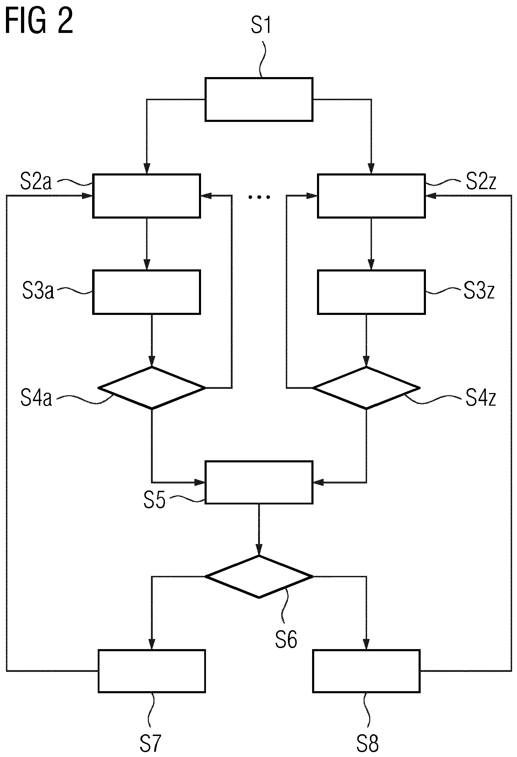

Figure 2 schematically illustrates a flow diagram of a method for automatically detecting controllers 211-22N in a hierarchical control system 100. The hierarchical control system 100 comprises a plurality of controllers 211-22N and a plurality of controllable nodes 311-32vN, e.g. switches, arranged in a plurality of levels. For instance, the levels may comprise a backbone level 101 and a cell level 102, as shown in figure 1. The cell level 102 comprises a plurality of cells 102a-102N. The hierarchical control system 100 may further comprise a plurality of routers and DNS name servers 11-12N being associated with the different levels or cells within a level 101, 102.

In a first method step S1, after startup, the controllable nodes 311-32vN, are provided with a minimum number K of required simultaneously connected controllers 211-22N and the mapping of controller types (i.e. types of names of controllers 211-22N) with their priorities. For instance, a set of predefined controller names may comprise cell-type controller names, such as controller-cell-1, controller-cell-2,... and backbone-type controller names, such as controller-backbone-1, controller-backbone-2,..., having a higher priority as compared to the cell-type controller names.

In a method step S2a, a controllable node 311-32vN is polling the DNS name server 11-12N of the corresponding cell or level in order to resolve a possible DNS entry of a controller 211-22N. The possible DNS entry comprises a prefix selected from the list of predefined controller names corresponding to the lowest priority and a suffix selected from a domain search list. The domain search list comprises search domains, starting with the domain of the controllable node 311-32vN and comprising all domains on higher levels. The controllable node 311-32vN will first try to resolve the controller at the lowest domain.

In step S3a, the DNS name server 11-12N checks if the possible DNS entry corresponds to one of the plurality of controllers 211-22N of the hierarchical control system 100. If this is the case, the DNS name server 11-12N sends a response signal to the controllable node 311-32vN.

In step S4a, the controllable node checks if a response signal has been received. If this is the case, the controllable node 311-32vN detects the low-level controller 221a-22N in a method step S5. Otherwise, the controllable node 311-32vN will try to resolve the controller 211-21n at higher domains, changing the suffix by increasing the level of the corresponding domain.

In parallel, the controllable node 311-32vN polls the DNS name server 11-12N of the hierarchical system 100 for possible DNS entries with prefixes selected from the list of predefined controller names corresponding to higher priorities, S2b,..., S2z, wherein z is an integer number corresponding to the highest priority.

The DNS name server 11-12N sends a response signal to the controllable node 311-32vN if the possible DNS entry corresponds to one of the plurality of controllers 211-22N of the hierarchical control system 100, step S3b,..., S3z.

In step S4b,...,S4z, the controllable node 311-32vN checks if a response signal has been received. If this is the case, the controllable node 311-32vN detects the controller 211-21n of the higher priority in a method step S5. Otherwise, the controllable node 311-32vN will try to resolve the higher-level controller 211-21n at higher domains, changing the suffix by increasing the level of the corresponding domain.

In a method step S6, the controllable node 311-32vN checks if the number of detected higher-level controllers 211-21n exceeds the minimum number K. If this is the case, the controllable node 311-32vN connects to the detected higher-level controllers 211-21n, S7. Otherwise, the controllable node 311-32vN preferably connects to lower-level controllers, only, S8.

In case the controllable node 311-32vN connects to higher-level controllers 211-21n, only, the lower-level controllers 221a-22N may be disabled. It may also be provided that the lower-level controllers 221a-22N are controlled by the higher-level controllers 211-21n to perform cell-related tasks only, thus establishing a hierarchy of tasks.

Preferably, the method is continuously repeated or repeated after certain periods of time, going back to steps S2a,... S2z.

The number of controllers 211-22N or controllable nodes 311-32vN may change, i.e. new controllers or controllable nodes may be added or existing controllers or controllable nodes may be disabled or removed. Because the controllable nodes are constantly polling the respective DNS name server 11-12N, the controllable nodes will always connect to existing controllers.

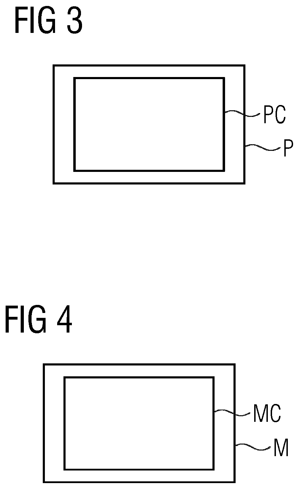

Figure 3 schematically illustrates a block diagram illustrating a computer program product P comprising executable program code PC. The executable program code PC is configured to perform, when executed (e.g.by a computing device), the method for automatically detecting controllers 211-22N. The computer program product P may run on or be part of an agent of a controllable node 311-32vN as described above.

Figure 4 schematically illustrates a block diagram illustrating a non-transitory, computer-readable storage medium M comprising executable program code MC configured to, when executed (e.g. by a computing device), perform the method for automatically detecting controllers 211-22N.

## Claims

1. A method for automatically detecting controllers (21i, 22i) in a hierarchical control system (100), wherein the hierarchical control system (100) comprises a plurality of controllers (21i, 22i) and a plurality of controllable nodes (32i, 32ij) arranged in a plurality of levels (101, 102), the method comprising the steps:
- polling, by one of the controllable nodes (32i, 32ij), a DNS name server (11, 12i) of the hierarchical control system (100), for a possible DNS entry of a controller (21i, 22i), the possible DNS entry comprising a prefix selected from a set of at least one predefined controller name, and a suffix being selected from a domain search list of at least one search domain;
- sending, by the DNS name server (11, 12i), a response signal to the controllable node (32i, 32ij), if the possible DNS entry corresponds to one of the plurality of controllers (21i, 22i) of the hierarchical control system (100); and
- detecting, by the controllable node (32i, 32ij), the controller (21i, 22i) corresponding to the possible DNS entry, based on receiving the response signal.

2. The method according to claim 1, wherein polling the DNS name server (11, 12i) is repeated until a predetermined minimum number of controllers (21i, 22i) is detected.

3. The method according to claim 1 or 2, wherein the controllable node (32i, 32ij) automatically connects to the detected controller (21i, 22i).

4. The method according to claim 3, wherein a priority is assigned to each controller name out of the set of at least one predefined controller name, and wherein automatically connecting the controllable node (32i, 32ij) to the controllers (21i, 22i) takes the priority assigned to the controller names into account.

5. The method according to claim 4, wherein the controllable node (32i, 32ij) connects to controllers (21i, 22i) of higher priority than the currently connected controllers (21i, 22i) only if a predetermined minimum number of controllers (21i, 22i) of the higher priority has been detected.

6. The method according to claims 4 or 5, wherein, when all controllable nodes (32i, 32ij) are connected to controllers (21i, 22i) of at least a certain priority, controllers (21i, 22i) of lower priorities are disabled.

7. The method according to any of the preceding claims, wherein polling the DNS name server (11, 12i) is triggered if the controllable node (32i, 32ij) is connected to less than a predetermined minimum number of controllers (21i, 22i).

8. The method according to any of the preceding claims, wherein the suffix of the possible DNS entry is selected from search domains of the same or higher levels as the level of the controllable node (32i, 32ij) itself.

9. The method according to any of the preceding claims, wherein the number of controllers (21i, 22i) of the plurality of controllers (21i, 22i) is dynamically adjustable.

10. The method according to claim 9, wherein the hierarchical control system (100) comprises a plurality of routers arranged in the plurality of levels, wherein a newly added controller (21i, 22i) is assigned to a router of the same level, and wherein the assigned router is adapted to assign a unique DNS entry to the newly added controller (21i, 22i) using a prefix selected from the set of at least one predefined controller name.

11. A controllable node (32i, 32ij) of a hierarchical control system (100), wherein the hierarchical control system (100) comprises a plurality of controllers (21i, 22i) and a plurality of controllable nodes (32i, 32ij) arranged in a plurality of levels, the controllable node (32i, 32ij) being arranged to:
- poll a DNS name server (11, 12i) of the hierarchical control system (100) for a possible DNS entry of a controller (21i, 22i), the possible DNS entry comprising a prefix selected from a set of at least one predefined controller name, and a suffix being selected from a domain search list of at least one search domain;
- receive, from the DNS name server (11, 12i), a response signal being sent if the possible DNS entry corresponds to one of the plurality of controllers (21i, 22i) of the hierarchical control system (100); and
- detect the controller (21i, 22i) corresponding to the possible DNS entry, based on receiving the response signal.

12. The controllable node (32i, 32ij) according to claim 11, wherein the controllable node (32i, 32ij) is adapted to automatically connect to the detected controller (21i, 22i) .

13. A hierarchical control system (100), comprising:
a plurality of controllers (21i, 22i) arranged in a plurality of levels (101, 102);
at least one DNS name server (11, 12i); and
a plurality of controllable nodes (32i, 32ij) arranged in the plurality of levels (101, 102), the controllable nodes (32i, 32ij) being arranged to poll the DNS name server (11, 12i) for a possible DNS entry of a controller (21i, 22i), the possible DNS entry comprising a prefix selected from a set of at least one predefined controller name, and a suffix being selected from a domain search list of at least one search domain;
wherein the DNS name server is adapted to send a response signal to the controllable node (32i, 32ij) if the possible DNS entry corresponds to one of the plurality of controllers (21i, 22i) of the hierarchical control system (100); and
wherein the controllable node (32i, 32ij) is adapted to detect the controller (21i, 22i) corresponding to the possible DNS entry based on receiving the response signal.

14. A computer program product (P) comprising executable program code (PC) configured to, when executed by a computing device, perform the method according to claims 1 to 10.

15. A non-transitory, computer-readable storage medium (M) comprising executable program code (MC) configured to, when executed by a computing device, perform the method according to claims 1 to 10.
